# EUROPEAN PATENT APPLICATION

(11) **EP 1 763 026 A1**
(43) Date of publication of application: **14.03.2007**
(21) Application number: 06119980.8
(22) Date of filing: 01.09.2006
(51) Int. Cl.: G11B 19/10

(54) **Method of protecting data storage media when a computer is going to be turned off**

(30) Priority: 09.09.2005 IT MI20051667
(71) Applicant: IVECO S.p.A., 10156 Torino (IT)
(72) Inventor: Bertozzi, Franco, 10040 Druento (IT)
(74) Representative: Borsano, Corrado

(57) **Abstract**

A method of protecting data storage media when a computer is going to be turned off is described, said method comprising a step in which a warning is given to indicate the presence of one or more external data read/write devices connected to said computer, and/or a step in which a warning is given to indicate the presence of one or more data storage media inserted in the computer when the command to turn off the computer is sent.

## Description

The present invention relates to a method of protecting data storage media when a computer is going to be turned off.

Computers, for example personal computers, provide for the connection, via data input ports, for example serial or parallel ports such as the USB or PCMCIA ports, of different types of external read/write devices, such as for example hard-disk memories, pen-drives, burning devices, floppy- drives, which may in turn contain removable recordable data storage media such as CDs, DVDs, floppy-disks etc.

Furthermore said computers are normally provided with internal data read/write devices, such as floppy drives or CD/DVD drives, into which removable data storage media such as CDs, DVDs, floppy-disks etc. can usually be inserted.

When the command to turn off the computer is sent, the operator may forget to remove the data storage media, which may thus be left unattended inside the relative read/write devices, when they should instead have been removed and stored in a safe place, with the subsequent risk of said data storage media being stolen and taken away, given the ease with which they can be removed. This may have serious consequences, for example if said data storage media contain sensitive, confidential or important information.

Therefore the purpose of the present invention is to solve the problems described above with a method of protecting data storage media when a computer is going to be turned off.

The invention relates to a method of protecting data storage media when a computer is going to be turned off, characterized in that it comprises a step in which a warning is given to indicate the presence of one or more external data read/write devices connected to said computer, and/or a step in which a warning is given to indicate the presence of one or more data storage media inserted in the computer when the command to turn off the computer is sent.

In particular the present invention relates to a method of protecting data storage media when a computer is going to be turned off, as described more fully in the claims, which are an integral part of this description.

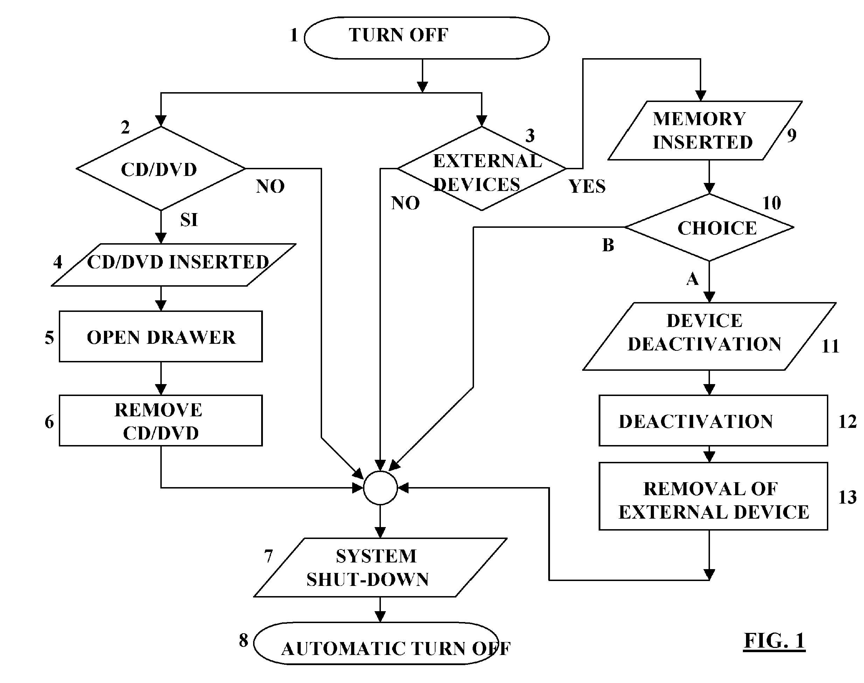

The purposes and advantages of this invention will become clear from the following detailed description of a preferred embodiment (and the relative alternative embodiments), and the drawings that are attached hereto, which are merely illustrative and not limitative, in which figure 1 is a block process flow diagram of the method according to the present invention.

The method according to the present invention consists of providing the computer (hereafter for the sake of brevity referred to using the acronym "PC") with means for giving a warning to indicate the presence of external data read/write devices that are connected to the computer and to indicate the presence of data storage media that are still inserted when the command to turn off the computer is sent. In this way the operator can be prevented from forgetting said data storage media in the PC, so that said media can be removed and stored in an appropriate place.

In particular the PC is provided with means for executing the following procedure, with reference to figure 1 attached hereto.

When the operator sends the command to turn off the PC (block 1 - TURN OFF), the latter performs two types of checks: it verifies the presence of any data storage media inserted (block 2 - CD/DVD) in the internal read/write devices, and verifies the presence of any external read/write devices (block 3 - EXTERNAL DEVICES) connected to the PC.

Alternatively only one of said two types of checks may be performed.

If any data storage media are inserted (YES) in the internal read/write devices, a warning message such as "CD/DVD inserted in drive" appears on the PC display (block 4 - "CD/DVD INSERTED").

The drawer of the read/write device is then automatically opened (block 5 - OPEN DRAWER) according to a method already known in the prior art and already used in other circumstances, so that the operator can remove the data storage media and, if necessary, close the drawer (block 6 - REMOVE CD/DVD).

If there is a floppy-disk inserted in the internal floppy read/write device, a warning message such as "floppy-disk inserted in drive" appears on the PC display.

Next a warning message such as "CLOSING APPLICATIONS - SYSTEM SHUTDOWN" appears on the PC display (block 7) and the PC is AUTOMATICALLY TURNED OFF (block 8).

If there are no data storage media inserted (NO) in the internal read/write devices, the system performs the check in block 2 and then passes directly to the PC shutdown procedure, blocks 7 and 8.

If the check for the presence of external read/write devices connected to the PC is positive (YES) (block 3 - EXTERNAL DEVICES), a warning message such as "Memory connected to the USB/PCMCIA port or memory card inserted in drive" appears on the PC display (block 9 - "MEMORY INSERTED").

The operator is also presented with a choice (block 10 - CHOICE) by means of another message that appears on the display, such as "Disconnect the interface to remove the memory" (choice A) and "Leave the memory connected" (choice B).

If the operator chooses to disconnect the interface (choice A), a warning message such as "Deactivating a hardware device" appears on the PC display (block 11 - "DEVICE DEACTIVATION"). The PC deactivates the device (block 12 - DEACTIVATION) according to a method that is already known and performed in other circumstances, so that the operator can, if necessary, remove the external read/write device (block 13 - REMOVAL OF EXTERNAL DEVICE).

Next a warning message such as CLOSING APPLICATIONS -SYSTEM SHUTDOWN" appears on the PC display (block 7) and the PC is AUTOMATICALLY TURNED OFF (block 8).

If the operator chooses not to disconnect the interface (choice B), the system moves directly from the choice in block 10 to the PC shutdown procedure, blocks 7 and 8.

If, instead, the result of the check for the presence of external read/write devices connected to the PC is negative (NO), the system moves directly from the check in block 3 to the PC shutdown procedure, blocks 7 and 8.

The procedure described above, according to the present invention, can be implemented advantageously in a computer program comprising program code means for performing one or more steps of said procedure, when said program is run on a computer. For this reason the patent shall also cover said computer program and the computer-readable means that comprise a recorded message, said computer-readable means comprising the program code means for performing one or more steps of said method, when said program is run on a computer.

It will be apparent to the person skilled in the art that other alternative and equivalent embodiments of the invention can be conceived and reduced to practice without departing from the true spirit of the invention.

The advantages deriving from the application of the present invention are clear.

In particular, the operator is prevented from inadvertently leaving data storage media inserted in the internal read/write devices, and/or from leaving external read/write devices connected to the computer when said computer is turned off, thus preventing any risk of the unauthorized removal thereof.

It will be possible for the person skilled in the art to embody the invention without introducing any further construction details. In particular said person skilled in the art will be able to embody the computer programs that implement the method, as extensions of existing programs, for example at operating system level.

## Claims

1. Method of protecting data storage media when a computer is going to be turned off, **characterized in that** it comprises a step in which a warning is given to indicate the presence of one or more external data read/write devices connected to said computer, and/or a step in which a warning is given to indicate the presence of one or more data storage media inserted in the computer when the command to turn off the computer is sent.

2. Method according to claim 1, **characterized in that** said step in which a warning is given to indicate the presence of one or more data storage media inserted in the computer comprises the following steps:
- verifying the presence of data storage media inserted (2) in the internal read/write devices;
- if data storage media are inserted in the internal read/write devices:
- a data storage media present warning message appears (4);
- a shutdown warning message appears (7);
- the computer is turned off (8);
- if no data storage media are inserted in the internal read/write devices:
- a shutdown warning message appears (7);
- the computer is turned off (8).

3. Method according to claim 2, **characterized in that** if data storage media are inserted in the internal read/write devices, said step in which the system verifies the presence of data storage media inserted (2) in the internal read/write devices also comprises a step in which the read/write device is opened (5) to enable the data storage media to be removed.

4. Method according to claim 1, **characterized in that** said step in which a warning is given to indicate the presence of one or more external read/write devices connected to said computer comprises the following steps:
- verifying the presence of one or more external read/write devices connected to the computer (3);
- if external read/write devices are found to be connected:
- an external read/write devices connected warning message appears (9);
- the choice is given to the operator to disconnect said device (A) or not (B);
- if the choice to disconnect said device (A) is made:
- a disconnection warning message appears (11);
- said device is deactivated (12) so that it can be removed;
- a shutdown warning message appears (7);
- the computer is turned off (8);
- if the choice not to disconnect said device (B) is made:
- a shutdown warning message appears (7);
- the computer is turned off (8);
- if no external read/write devices are found to be connected:
- a shutdown warning message appears (7);
- the computer is turned off (8).

5. Device for protecting data storage media when a computer is going to be turned off, **characterized in that** it comprises means for implementing the method according to any of the claims from 1 to 4.

6. Computer program comprising program code means suitable for performing the steps in claims 1 to 4, when said program is run on a computer.

7. Computer-readable means comprising a recorded program, said computer-readable means comprising the program code means in order to perform the steps in claims 1 to 4, when said program is run on a computer.
